# EUROPÄISCHE PATENTSCHRIFT

(11) **EP 2 920 460 B1**
(45) Veröffentlichungstag und Bekanntmachung des Hinweises auf die Patenterteilung: **02.01.2019**
(21) Anmeldenummer: 13786286.8
(22) Anmeldetag: 06.11.2013
(51) Int. Cl.: F03D 80/30, F03D 1/06

(54) **ROTORBLATTSPITZE UND HERSTELLUNGSVERFAHREN**
ROTOR BLADE TIP AND MANUFACTURING METHOD
EXTRÉMITÉ DE PALE DE ROTOR ET PROCEDÉ DE FABRICATION POUR CELLE-CI

(30) Priorität: 15.11.2012 DE 102012220936; 04.04.2013 DE 102013205965
(43) Veröffentlichungstag der Anmeldung: 23.09.2015
(73) Patentinhaber: Wobben Properties GmbH, 26607 Aurich (DE)
(72) Erfinder: HOFFMANN, Alexander, 26721 Emden (DE); DULLE, Dennis, 49733 Haren (DE); CLEMENS, Christian, 10407 Berlin (DE)
(74) Vertreter: Eisenführ Speiser
(86) Internationale Anmeldenummer: PCT/EP2013/073188
(87) Internationale Veröffentlichungsnummer: WO 2014/075976

(56) Entgegenhaltungen:
- EP-A1- 2 226 497
- EP-A2- 2 157 316
- EP-A2- 2 320 075
- WO-A1-2011/080177
- WO-A2-2009/135902
- WO-A2-2010/023299
- WO-A2-2011/067323
- DE-A1-102005 045 579

## Beschreibung

Die vorliegende Erfindung betrifft ein Rotorblatt einer Windenergieanlage, das einen Hauptteil und eine Blattspitze aufweist. Weiterhin betrifft die vorliegende Erfindung eine Verbindungsvorrichtung zum Verbinden eines solchen Blatthauptteils mit der Rotorblattspitze und die vorliegende Erfindung betrifft eine Rotorblattspitze, die nachfolgend vereinfacht auch als Blattspitze bezeichnet wird, und die vorliegende Erfindung betrifft ein Verfahren zum Montieren einer Blattspitze an einem Hauptteil eines Rotorblattes.

Ein Randbogen eines Rotorblattes für eine Windenergieanlage ist aus PCT/EP2003/014621 bekannt. Dieses Rotorblatt weißt einen sogenannten Rotorblatt Tip auf, der abgewinkelt am Ende des Rotorblatts angebracht ist.

Ein Nachteil des in PCT/EP2003/014621 offenbarten Randbogens besteht darin, dass wie vorgeschlagen, der Randbogen, der auch als Rotorblattspitze bezeichnet werden kann, aus Aluminium ausgeführt ist. Dieser Randbogen kann entsprechend schwer und teuer in der Herstellung sein.

Die Begriffe Randbogen, Rotorblattspitze oder einfach Blattspitze werden in dieser Anmeldung synonym verwendet.

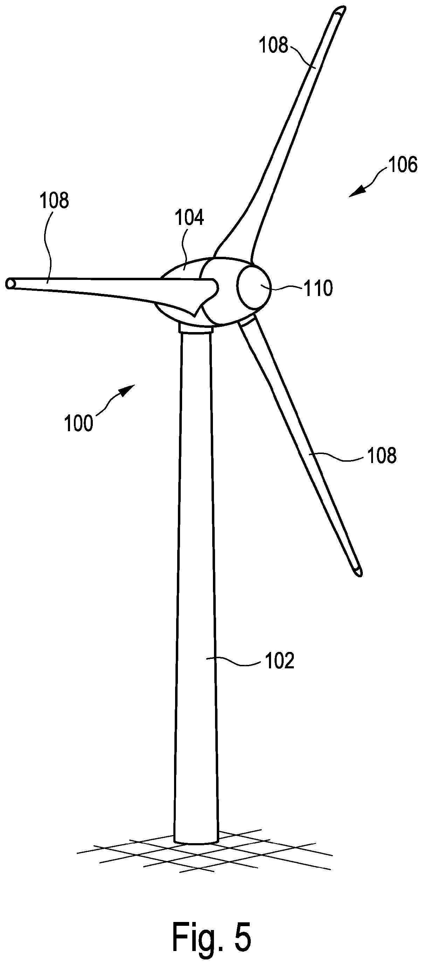

Windenergieanlagen, insbesondere solche vom Typ Horizontalachsenwindenergieanlagen mit üblicher Weise drei Rotorblättern sind allgemein bekannt und eine solche ist in Figur 5 gezeigt. Zur Verbesserung der Aerodynamik werden Rotorblattspitzen vorgeschlagen, die am äußersten Ende eines Rotorblattes aus der Rotorebene gebogen sind.

Da heutige moderne Windenergieanlagen sehr große Rotorblätter einsetzen, können diese ein Problem beim Transport darstellen. In diesem Zusammenhang kann es eine Erleichterung sein, wenn die abgewinkelte bzw. abgebogene Blattspitze erst vor Ort montiert wird. Außerdem ist zu berücksichtigen, dass im Falle eines Blitzschlags der Blitz in das äußerste Ende des Rotorblatts, also in die Blattspitze, einschlägt. Auch hierfür kann eine austauschbare Blattspitze sinnvoll sein, um diese nach einem Blitzschlag tauschen zu können.

Aus der internationalen Patentanmeldung WO2012/031976 ist eine abnehmbare Rotorblattspitze bekannt. Dort wird vorgeschlagen, eine Rotorblattspitze in einen Endbereich des Rotorblatts einzusetzen und außerdem eine formschlüssige Verbindung mit einem vorgespannten Riegel herzustellen. Ergänzend kann eine Schraube als Sicherungselement dienen.

Eine solche Verbindung kann auch nachteilig sein, weil jedenfalls zum Betätigen der genannten Schraube zur Sicherung durch die Oberfläche des Rotorblattes hindurchgearbeitet werden muss. Es entsteht somit dort am Rotorblatt eine Störstelle. Um diese zu verdecken würde eine Lackierung dazu führen, dass diese Schraube bei Bedarf eines Wechselns der Blattspitze nur schwer wiedergefunden werden kann. Auch oder anderenfalls kann eine solche Störstelle zum Eindringen von Feuchtigkeit in das Material des Rotorblatts führen. Sowohl Rotorblatt als auch die betroffenen Elemente der Verbindungsvorrichtung können dadurch dauerhaft geschädigt werden.

Weitere Beispiele aus dem Stand der Technik sind aus WO2009135902, WO2010023299, DE102005045579 und EP2226497 bekannt.

Aufgabe der vorliegenden Erfindung ist es somit, wenigstens eines der genannten Probleme zu adressieren. Insbesondere soll eine Lösung zum Verbinden einer Rotorblattspitze mit dem Hauptteil eines Rotorblatts vorgeschlagen werden, die eine Lösbarkeit vereinfacht und Schäden am Rotorblatt möglichst vermeidet. Insbesondere soll eine besonders nachhaltige Lösung mit wenig Kosten vorgeschlagen werden. Insbesondere soll ein verbesserter Randbogen bzw. eine verbesserte Rotorblattspitze vorgeschlagen werden, der bzw. die insbesondere kostengünstiger herzustellen sein soll. Zumindest soll eine alternative Lösung vorgeschlagen werden.

Zur Behebung der gennannten Nachteile sieht eine Ausführungsform der Erfindung vor, dass der Ansatz der Rotorblattspitze aus demselben Material gefertigt ist, wie das Rotorblatt, und dass lediglich die Spitze, nämlich das erste Teil aus einem elektrisch leitenden Material hergestellt ist.

Eine wesentliche Erkenntnis der Erfindung beruht auf der Tatsache, dass
- ein vollständig aus Aluminium hergestellter Randbogen schwerer ist als ein zumindest teilweise aus Glasfaserverbundwerkstoff hergestellter Randbogen.

Die Erfindung hat den Vorteil, zumindest gemäß einer Ausführungsform, dass der Randbogen aus demselben Material hergestellt ist, wie das Rotorblatt, zumindest im Verbindungsbereich zwischen Rotorblatt und Randbogen, und somit direkt über eine Klebeverbindung mit diesem verbunden werden kann.

Weitere Einzelheiten und Vorteile der Erfindung sind in den Ausführungsbeispielen auch gemäß den Zeichnungen offenbart.

Erfindungsgemäß wird auch ein Rotorblatt einer Windenergieanlage gemäß Anspruch 1 vorgeschlagen.

Demnach weist das Rotorblatt ein Hauptteil und eine Blattspitze auf, wobei die Blattspitze mittels einer Verbindungsvorrichtung an dem Hauptteil lösbar befestigt wird. Die Verbindungsvorrichtung weist einen Spitzenabschnitt und einen Basisabschnitt auf. Der Spitzenabschnitt ist an der Blattspitze befestigt und der Basisabschnitt ist an dem Hauptteil befestigt und zum Aufnehmen des Spitzenabschnitts vorbereitet, also an diesen angepasst. Der Spitzenabschnitt weist wenigstens ein zum Basisabschnitt reichendes Fixiermittel auf, zum Fixieren des Spitzenabschnitts an dem Basisabschnitt. Das Fixiermittel wird zum Vornehmen der Fixierung durch eine Öffnung in der Oberfläche der Blattspitze hindurch betätigt. Die Erfindung macht sich eine Biegung der Blattspitze zu nutze und verwendet den entsprechenden, gebogenen Bereich zum Vorsehen der Öffnung zum Betätigen des Fixiermittels, nämlich den konvexen Bereich der Biegung bzw. den Außenbereich der Biegung, im Sinne einer Außenkurve. Wenn die Blattspitze also zur Druckseite des Rotorblatts gebogen ist, ist die Außenbiegung an der bzw. zur Saugseite des Rotorblattes. Genau an diesem Bereich wird vorgeschlagen, die Öffnung vorzusehen.

Vorzugsweise sollte diese Öffnung möglichst klein gehalten werden, insbesondere so klein, dass das Fixiermittel durch die Öffnung zwar betätigt, aber nicht eingesetzt werden kann. So kann ein nach außen weisendes Loch möglichst klein gehalten werden.

Die Rotorblattspitze kann somit also an dem Hauptteil angesetzt werden und es erfolgt dann eine Fixierung durch eine Öffnung in der Oberfläche der Blattspitze hindurch.

Damit kann eine Öffnung im Rotorblatthauptteil vermieden werden. Dies hat insbesondere den Vorteil, dass die Rotorblattspitze als einzelnes, im Vergleich zum Rotorblatthauptteil kleines Bauteil vergleichsweise gut produziert werden kann. Etwaige Öffnungen zum Betätigen des Fixiermittels können fertigungstechnisch präzise vorgenommen werden, wodurch etwaige Beschädigungen der Blattspitze vermieden werden.

Dadurch wird auch vermieden, dass die Blattspitze durch Witterungseinflüsse leidet. Sollte die Blattspitze gleichwohl in diesem Bereich beschädigt werden, so ergibt sich nur ein vergleichsweise geringes Problem, weil die Blattspitze vergleichsweise kostengünstig getauscht werden kann.

Die Betätigung durch eine Öffnung in der Oberfläche der Blattspitze hindurch erfolgt bspw. so, dass ein entsprechender Schraubenschlüssel oder Schraubendreher durch die Öffnung zu dem Fixiermittel geführt wird.

Vorzugsweise ist der Blatthauptabschnitt und außerdem oder alternativ die Blattspitze überwiegend aus faserverstärktem Kunststoff gefertigt, insbesondere aus glasfaserverstärktem Kunststoff. Insbesondere das Rotorblatthauptteil weist einige Stützstrukturen auf, die aus anderem Material gefertigt werden können. Insbesondere der überwiegende Teil der Rotorblattaußenhülle ist jedoch vorzugsweise aus faserverstärktem Kunststoff wie glasfaserverstärktem Kunststoff gefertigt. Es können andere Materialen wie bspw. Beschichtungslack oder Beschichtungsfolien hinzukommen. Auch die Verwendung von kohlefaserverstärktem Kunststoff kommt in Betracht.

Es wird vorgeschlagen, dass in einen solchen faserverstärkten Kunststoff der Basisabschnitt bzw. der Spitzenabschnitt einlaminiert ist. Dazu weist der Basisabschnitt bzw. der Spitzenabschnitt einen entsprechenden, insbesondere als Profil ausgearbeiteten Bereich auf, der bereits beim Herstellen des Rotorblattes in der entsprechenden Herstellungsform vorgesehen sein kann. Das Rotorblatthauptteil bzw. die Blattspitze kann somit beim Vorsehen der entsprechenden Gelege und dann dem Einbringen des entsprechenden Harzes zum Erzeugen des faserverstärkten Kunststoff bereits in seiner Position vorhanden sein und somit unmittelbar mit hergestellt werden. In diesem Sinne ist auch das Einlaminieren zu verstehen, dass nämlich der entsprechende Einarbeitungsansatz des Basisabschnitts bzw. des Spitzenabschnitts unmittelbar auf die Gelege aufgebracht wird bzw. die Gelege unmittelbar auf diesem Abschnitt angeordnet und mit Harz getränkt werden.

Vorzugsweise weist der Spitzenabschnitt und/oder der Basisabschnitt wenigstens einen Verbindungsstift zum kippstabilen Einsetzen in korrespondierende Öffnungen an dem Basisabschnitt bzw. dem Spitzenabschnitt auf. Es können also bspw. zwei parallele Stifte an dem Spitzenabschnitt vorgesehen sein, die zur Befestigung in entsprechende Bohrungen in dem Basisabschnitt eingesetzt, insbesondere eingeschoben werden. Ebenso können die Stifte an dem Basisabschnitt vorgesehen sein, so dass die Blattspitze mit ihrem Spitzenabschnitt auf diese Stifte aufgesetzt wird. Vorzugsweise sind die Stifte aber, wie oben beschrieben, an dem Spitzenabschnitt, so dass etwaige Transportprobleme bei dem Hauptteil des Rotorblattes vermieden werden.

Ein bevorzugtes Rotorblatt ist dadurch gekennzeichnet, dass das wenigstens eine Fixiermittel
- mit einem ersten Ende in eine korrespondierende Aufnahme in dem Basisabschnitt eingreift und
- mit einem zweiten, dem ersten Ende abgewandten Ende, zum Vornehmen der Fixierung und zum Lösen der Fixierung in der Blattspitze angeordnet ist, wobei das zweite Ende so in die Blattspitze unter der Öffnung der Oberfläche der Blattspitze eingelassen ist, dass es durch die Öffnung in dieser Oberfläche betätigt werden kann und zwischen dem zweiten Ende und der Oberfläche Platz zum Anordnen eines Verschlussmittel zum zur Oberfläche bündigen Verschließen der Öffnung verbleibt.

Das Fixiermittel reicht somit von dem Blattspitzenabschnitt zum Basisabschnitt und damit von der Blattspitze zum Rotorblatthauptteil. Das Fixiermittel kann entsprechend mit einem ersten Ende, dass auch als erster Abschnitt bezeichnet werden kann, in dem Basisabschnitt verankert werden. Das zweite Ende, das auch als zweiter Abschnitt bezeichnet werden kann, ist in dem Spitzenabschnitt und damit der Blattspitze unterhalb der Öffnung der Blattspitze angeordnet. Dabei bezieht sich die Anordnung unterhalb der Öffnung auf die entsprechende Oberfläche, in der die Öffnung angeordnet ist und unterhalb der Oberfläche bedeutet somit im Inneren der Blattspitze. Dieses zweite Ende ist dabei aber nicht unmittelbar unter der Oberfläche, sondern soweit innen in der Blattspitze, dass in bzw. unterhalb der Öffnung ausreichend Platz für ein Verschlussmittel verbleibt. Dabei ist ausreichend Platz vorgesehen, so dass das Verschlussmittel so in die Öffnung eingesetzt werden kann, dass es diese bündig, nämlich bündig mit der Oberfläche verschließen kann. Ein aufgesetztes Verschlussmittel, wie ein aufgesetzter Stopfen, wird somit vermieden und somit eine aerodynamisch vorteilhafte Ausgestaltung ermöglicht. Es ist zu beachten, dass an der Rotorblattspitze die höchsten, relativen Luftgeschwindigkeiten auftreten.

Vorzugsweise ist das Fixiermittel als eine Schraube ausgebildet und kann durch die Öffnung hindurch an ihrem Schraubenkopf, der das zweite Ende des Fixiermittels somit bildet, in den Basisabschnitt mit ihrem Gewinde, dass das erste Ende dieses Fixiermittels bildet, in den Basisabschnitt hineingeschraubt werden.

Gemäß einer Ausgestaltung wird zudem vorgeschlagen, ein Verschlussmittel zu verwenden, dass nach dem Befestigen der Blattspitze an dem Rotorblatthauptteil ein Element des so zusammengesetzten Rotorblattes bildet. Das Verschlussmittel ist zum lösbaren Befestigen in der Öffnung vorgesehen und weist dafür einen Befestigungsmechanismus auf. Insoweit liegt also nicht lediglich ein einstückiges, elastisches Material, wie bspw. ein Stopfen, vor, sondern ein Befestigungsmechanismus, der insbesondere als Befestigungsmechanik ausgebildet ist, die durch ihre Betätigung erst eine feste Befestigung in der entsprechenden Öffnung bewirkt.

Vorzugsweise ist das Verschlussmittel dazu vorbereitet durch eine Stauchung in einer Längsrichtung seine Form, seinen Umfang und/oder seine Breite zu verändern, insbesondere zu vergrößern, um dadurch in der Öffnung gehalten zu werden. Diese Stauchung und das resultierende Ändern der Form, des Umfangs oder der Breite ist vorzugsweise nur in einem Abschnitt des Verschlussmittels vorgesehen. Insbesondere wird ein elastischer Teil, insbesondere ein elastisches Element gestaucht und erhöht dadurch den Umfang und setzt sich dadurch in der Öffnung fest.

Vorzugsweise wird die Stauchung durch Drehen eines Stauchungsmittels, insbesondere einer Schraube bewirkt, wodurch die Befestigung in der Öffnung bewirkt wird. Ein Drehen in die entgegengesetzte Richtung führt entsprechend zu einer Streckung in Längsrichtung und einer Abnahme der Breite und dadurch zum Lösen der Befestigung.

Um zu vermeiden, dass sich das gesamte Verschlussmittel beim Drehen des Stauchungsmittels mitdreht, sieht eine Ausführungsform vor, dass das Verschlussmittel einen an das Fixiermittel angepassten Halteabschnitt aufweist, bzw. umgekehrt. Dieser Halteabschnitt verhindert somit ein Mitdrehen des gesamten Verschlussmittels, wenn diese entsprechend betätigt wird, wobei aber das Stauchungsmittel und das VerschlussmittelVerschlussmittel insgesamt nicht an dem Fixiermittel befestigt ist, sondern das Fixiermittel nur besagtes Mitdrehen des VerschlussmittelVerschlussmittels verhindert. Dies gilt sowohl für das Befestigen des Verschlussmittels, als auch für ein Lösen des Verschlussmittels.

Eine noch weitere Ausgestaltung schlägt vor, dass das Rotorblatt dadurch gekennzeichnet ist, dass die Verbindungsvorrichtung mit Blitzleitmitteln verbunden ist und dazu vorbereitet ist, elektrischen Strom eines in die Blattspitze einschlagenden Blitzes zum Blatthauptabschnitt weiterzuleiten, und dass vorzugsweise das VerschlussmittelVerschlussmittel elektrisch isolierend ausgeführt ist, oder so elektrisch leitend ausgeführt ist, dass sie den elektrischen Strom eines in das VerschlussmittelVerschlussmittel einschlagenden Blitzes zur Verbindungsvorrichtung weiterleiten kann. Es sind somit Blitzleitmittel vorgesehen, die ein Ableiten eines in die Blattspitze einschlagenden Blitzes durch die Verbindungsvorrichtung von der Blattspitze zum Rotorblatthauptteil ermöglicht. Bspw. kann der Spitzenabschnitt hierzu mit einem entsprechenden Blitzableiter in der Blattspitze elektrisch leitend verbunden sein und im eingesetzten Zustand bspw. über Verbindungsstifte eine elektrische Leitfähigkeit zum Basisabschnitt herstellen, der wiederum seinerseits mit Blitzleitmitteln im Blatthauptteil verbunden ist. Diese Stifte und entsprechenden Aufnahmen sind dabei so dimensioniert, dass ein entsprechender Blitzstrom zumindest kurzfristig geführt werden kann.

Das VerschlussmittelVerschlussmittel kann hierfür isolierend ausgebildet sein, so dass zu erwarten ist, dass ein Blitz in einen anderen Teil, nämlich in ein vorgesehenes Blitzleitmittel in der Blattspitze einschlägt. Alternativ kann das VerschlussmittelVerschlussmittel gezielt elektrisch leitfähig ausgeführt sein und entsprechend bis zur Oberfläche der Blattspitze reichen. Entsprechend ist das Verschlussmittel so auszulegen und so mit dem Spitzenabschnitt elektrisch zu verbinden, dass ein elektrischer Strom eines Blitzschlags über das Verschlussmittel, den Spitzenabschnitt und den Basisabschnitt abgeleitet werden kann.

Außerdem wird eine Verbindungsvorrichtung zum Verbinden eines Blatthauptteils und einer Blattspitze eines Rotorblattes bzw. eines Randbogens eines Rotorblattes aneinander vorgeschlagen. Diese Verbindungsvorrichtung weist die Elemente, Merkmale und/oder Eigenschaften auf, die bereits oben im Zusammenhang mit wenigstens einer der erläuterten Ausführungsformen des Rotorblattes beschrieben wurden. Ebenfalls wird eine Blattspitze eines Rotorblattes vorgeschlagen, die die Elemente, Merkmale und/oder Eigenschaften aufweist, die oben bereits im Zusammenhang mit wenigstens einer Ausführungsform des Rotorblattes beschrieben wurden.

Vorzugsweise wird ein Randbogen bzw. eine Blattspitze vorgeschlagen, die dadurch gekennzeichnet ist, dass der erste Abschnitt als Rand des Randbogens bzw. der Blattspitze ausgebildet ist und den zweiten Abschnitt ganz oder teilweise einfasst. Das elektrisch leitfähige Material fasst also das elektrisch nicht leitfähige Material ein. Dabei erfolgt eine Einfassen im Sinne eines ganz oder teilweise umlaufenden Randes oder Rahmens. Insbesondere der Spitzenabschnitt der Blattspitze und die beiden Ränder bzw. Kanten der Blattspitze bzw. des Randbogens sind elektrisch leitfähig, insbesondere aus Metall. Von diesen beiden Rändern bzw. Kanten weist einer bestimmungsgemäß im Wesentlichen in Bewegungsrichtung des Rotorblattes, bei bestimmungsgemäßem Betrieb der Windenergieanlagen, und der andere Rand bzw. die andere Kante weist im Wesentlichen in die entgegengesetzte Richtung.

Es wurde erkannt, dass ein Blitz nicht oder nicht ausschließlich in die Spitze der Blattspitze einschlagen muss, sondern auch an den Kanten erwartet werden kann oder eine lokale Ausdehnung aufweisen kann, die nicht auf die Spitze beschränkt ist. Vorzugsweise kann hier bei entsprechender Ausbildung der Blattspitze der Synergieeffekt genutzt werden, dass das Vorsehen des elektrisch leitfähigen Materials, insbesondere Metalls, an den Rändern auch eine elektrische Leitung des Stromes von der Spitze weg zu einem Anschluss zum Anschließen an dem Rotorblatthauptteil erreicht. Weiterhin ergibt sich als weiterer Synergieeffekt, dass besonders durch das Vorsehen von Metall zumindest an dem Rand bzw. der Kante in Vorwärtsrichtung der bestimmungsgemäßen Drehbewegung des Rotors auch die mechanische Widerstandsfähigkeit des Metalls zusätzlich zu ihren Fähigkeiten des Blitzableitens ausgenutzt werden kann. Eine Rotorblattspitze kann sich bei modernen Windenergieanlagen, die Rotordurchmesser von inzwischen bis zu 126 Metern aufweisen, mit erheblicher Geschwindigkeit bewegen. Jeglicher Kontakt mit Verschmutzungen oder Insekten kann bei solchen hohen Geschwindigkeiten leicht eine Beschädigung verursachen.

Die Verwendung eines solchen Randes aus elektrisch leitfähigem Material, insbesondere Metall, kann somit hier gegen einen Schutz bieten, Eigenschaften des Blitzschutzes erhöhen und gleichzeitig eine Rotorblattspitze bzw. einen Randbogen mit vergleichsweise geringem Gewicht schaffen.

Vorzugsweise ist der erste Abschnitt, nämlich der elektrisch leitfähige, insbesondere metallische Abschnitt als Rahmen zum Aufnehmen oder Einfassen des zweiten Abschnitts ausgebildet. Dieser Rahmen kann somit den zweiten Abschnitt aufnehmen und dadurch eine gute Verbindung beider Abschnitte erreichen und entsprechend eine stabile Blattspitze bzw. einen stabilen Randbogen schaffen.

Eine weitere Ausgestaltung schlägt vor, dass der erste Abschnitt, nämlich insbesondere der Rahmen, einen Aufnahmerahmen zum Aufnehmen des zweiten Abschnitts und einen Befestigungsrahmen zum Befestigen an dem Aufnahmerahmen und dadurch zum Fixieren des zweiten Abschnitts an dem Aufnahmerahmen aufweist. Somit kann der zweite Abschnitt in den Aufnahmerahmen eingesetzt oder eingelegt werden, wobei beide Elemente hierbei vorzugsweise bereits passgenau gefertigt sind. Schließlich kann dann der Befestigungsrahmen aufgelegt, eingelegt oder eingesetzt werden, nämlich so, dass sich bspw. ein Teil des zweiten Abschnitts, z.B. ein umlaufender Aufnahme- oder Halterand des zweiten Abschnitts zumindest teilweise zwischen dem Aufnahmerahmen und dem Befestigungsrahmen befindet. Hierdurch kann der zweite Abschnitt in diesem Bereich eingefasst oder einklemmt werden. Die Befestigung des Befestigungsrahmens an dem Aufnahmerahmen erfolgt bspw. mittels Befestigungsmitteln wie Schrauben oder Nieten oder dergleichen.

Vorzugsweise ist ein Randbogen gemäß wenigstens einer der vorstehend beschriebenen oder später noch beschriebenen Ausführungsformen dazu vorbereitet, an dem Rotorblatthauptteil befestigt zu werden. Insbesondere erfolgt die Befestigung wie im Zusammenhang mit wenigstens einer Ausführungsform des Rotorblattes, einer Verbindungsvorrichtung oder eines Verfahrens zum Verbinden beschrieben wurde. Hierdurch kann auf vorteilhafte Weise ein Rotorblatt gefertigt werden, insbesondere auch erst am Aufstellungsort im Bereich der Blattspitze zusammengesetzt werden. Dies erleichtert den Transport des Rotorblattes und ermöglicht ggf. auch einen Austausch eines Randbogens bzw. einer Blattspitze im Falle eines Blitzeinschlags, falls nötig.

Außerdem wird ein Verfahren zum Montieren einer Blattspitze an einem Blatthauptteil eines Rotorblattes vorgeschlagen. Das Verfahren verwendet eine Blattspitze, wie sie oben im Zusammenhang mit wenigstens einer Ausführungsform des Rotorblattes beschrieben wurde. Außerdem ist die Blattspitze an einem Hauptteil eines entsprechenden Rotorblattes zu montieren.

Das Verfahren schlägt vor, dass zunächst die Blattspitze mit ihrem Spitzenabschnitt an den an dem Blatthauptteil befestigten Basisabschnitt anzusetzen. Hierdurch wird die Blattspitze zunächst an dem Hauptteil des Rotorblatts angesetzt und dann in einem nächsten Schritt fixiert, in dem das Fixiermittel betätigt wird, das oben im Zusammenhang mit wenigstens einer Ausführungsform des Rotorblattes beschrieben wurde.

Nachfolgend wird die Erfindung anhand von Ausführungsformen unter Bezugnahme auf die begleitenden Figuren beispielhaft erläutert.
- Figur 1: zeigt eine perspektivische Ansicht eines Randbogens gemäß einer Ausführungsform.
- Figur 2: zeigt einen Randbogen ähnlich der schematischen Darstellung der Figur 2 in einer Draufsicht.
- Figur 3: zeigt zu einem Randbogen ähnlich der Figuren 2 und 3 eine seitliche Draufsicht auf den Rotorblattanschluss, nämlich den Anschluss zum Rotorblatthauptteil.
- Figur 4: zeigt schematisch ein Rotorblatt einer Windenergieanlage mit einem Randbogen.
- Figur 5: zeigt eine Windenergieanlage in einer perspektivischen Darstellung.
- Figur 6: zeigt eine Verbindungsvorrichtung gemäß einer Ausführungsform der Erfindung in einer Explosionsdarstellung einschließlich Blitzrezeptor aber ohne Verschlussmittel.
- Figur 7: zeigt in einer Explosionsdarstellung einen Teil der Verbindungsvorrichtung gemäß Figur 6 mit einer Rotorblattspitze und mit angedeutetem Verschlussmittel.
- Figur 8: zeigt einen Spitzenabschnitt einer Verbindungsvorrichtung einschließlich angeschlossenem Blitzrezeptor in einer perspektivischen Darstellung.
- Figur 9: zeigt in einer perspektivischen, teilgeschnittenen Ansicht ein Verschlussmittel und einen Teil einer Fixiervorrichtung.
- Figuren 10 bis 13: zeigen eine Blattspitze bzw. einen Randbogen gemäß einer Ausführungsform in unterschiedlichen Ansichten.

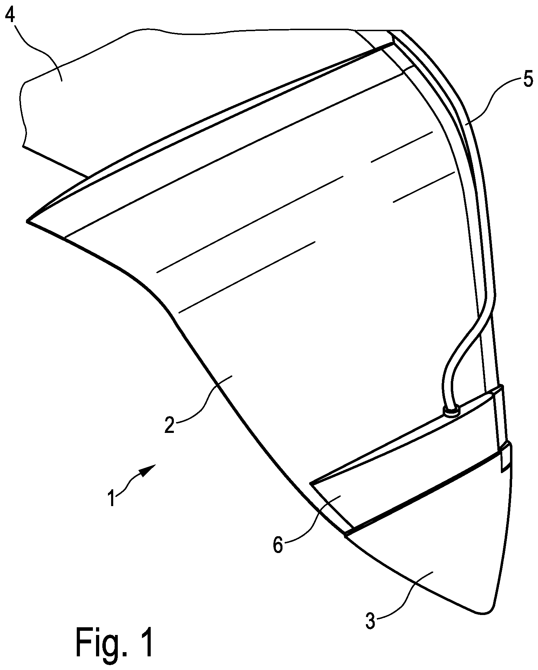

Fig. 1 zeigt eine perspektivische Ansicht von einem erfindungsgemäßen Randbogen. In dieser Ansicht ist der innere Teil des Blitzrezeptors 6 und der Blitzschutzleiter 5 nicht verdeckt gezeichnet. Der Blitzschutzleiter 5 befindet sich im Inneren des Randbogens 1. Die Spitze des Blitzrezeptors 3 ist aus einem elektrisch leitenden Material hergestellt. Besonders geeignet ist hier Aluminium oder Edelstahl, weil diese Materialen ein geringeres Gewicht aufweisen als Stahl oder Eisen. Der Blitzschutzrezeptor 3 ist mit einem elektrischen Leiter 5 verbunden, der auch als Blitzschutzleiter bezeichnet werden kann und der zum Anschlusspunkt des Rotorblattes 4 geführt wird. Der elektrische Leiter 5 kann entweder ein geformtes Stahlstück oder alternativ ein Kabel sein.

Am Rotorblattanschluss 4 wird der mit einem Blitzschutzleiter des Rotorblattes verbunden. In der vorgeschlagenen Ausführungsform wird der Anschluss mittels einer Schraubverbindung hergestellt.

Da der Randbogen 1, bis auf den Blitzrezeptor, gänzlich aus Werkstoffen aus Glasfasern gefertigt ist, wird der Blitzrezeptor und der Blitzschutzleiter 5 während der Fertigung in das Glasfasergelege eingebracht und verklebt. Der Randbogen wird aus zwei Halbschallen, je eine für die Saug- und Druckseite, hergestellt. Die Halbschalen werden aus Glasfasermatten und einem Vakuum-Infusionsverfahren hergestellt. Am Ende der Herstellung werden die Halbschalen mit dem Blitzrezeptor verklebt.

Nach der Fertigung ist nach außen nur die Spitze des Blitzrezeptors 3 zu sehen. Der innere Teil des Blitzrezeptors 6 ist im Randbogen 1 verborgen.

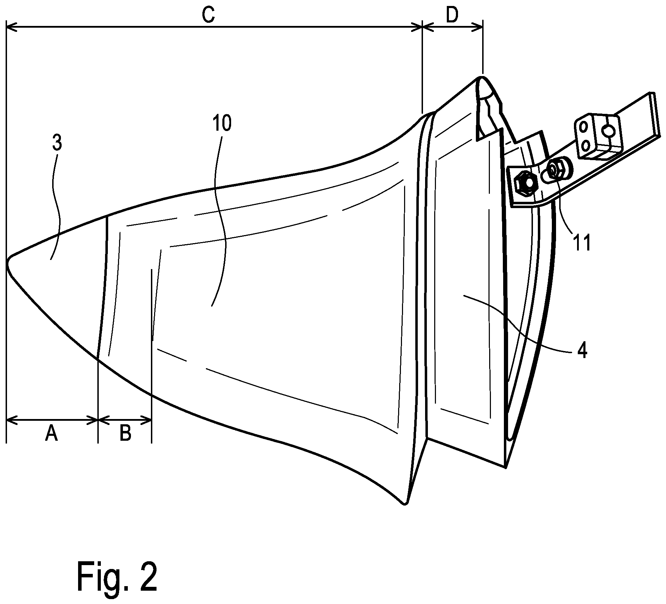

Fig. 2 zeigt den Randbogen in der Draufsicht. In dieser Abbildung ist nur die Spitze des Blitzrezeptors 3 zu sehen. Der innere Teil des Blitzrezeptors 6 ist im Randbogen eingearbeitet. Das Verhältnis (A/B) von äußerem 3 zu innerem Teil 6 des Blitzrezeptors liegt zwischen 2,0 und 2,7, besonders bevorzugt ist ein Verhältnis von 2,5. Das Verhältnis (C/D) von der Höhe des Randbogens und der Länge des Anschlusses an das Rotorblatt 4 liegt zwischen 3 und 3,5.

Der Blitzschutzleiter 5 des Randbogens wird über eine Schraubverbindung 11 mit dem Blitzschutzsystem des Rotorblattes verbunden.

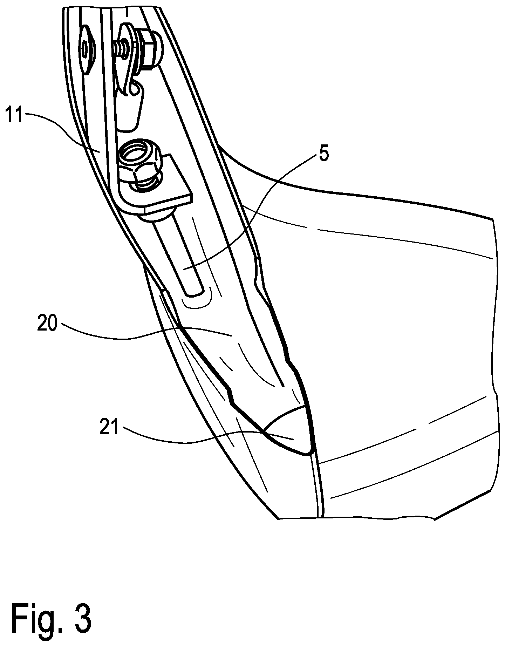

Fig. 3 zeigt den Randbogen 1 in einer seitlichen Draufsicht. Der Anschluss an das Rotorblatt wird mittels eines wasserbeständigen Materials 20 gefüllt, damit sich der Anschluss für den Blitzschutz 5 nicht während des Betriebes der Windenergieanlage bewegt, und dass nicht Kondenswasser vom Rotorblatt in den Randbogen eindringen kann. Angesammeltes Kondenswasser im Randbogen wird durch eine Bohrung im Randbogen möglichste nahe am Blitzrezeptor (hier nicht dargestellt) abgeführt. Diese Bohrung wird idealer Weise in einem 45° Winkel gebohrt, damit kein Regenwasser in den Randbogen eindringen kann, und das sich angesammeltes Wasser über die Bohrung herausgedrückt werden kann. Die Seiten des Rotorblattanschlusses 4 sind mit einer Füllung verstärkt, damit bei den auftretenden Belastungen nicht der Anschluss beschädigt wird.

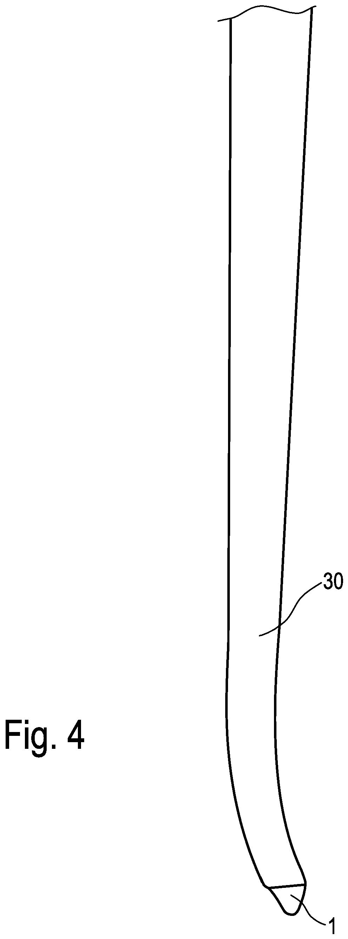

Fig. 4 zeigt ein Rotorblatt 30 einer Windenergieanlage mit einem erfindungsgemäßen Randbogen 1.

Der Blitzrezeptor oder Blitzschutzrezeptor kann auch als erster Abschnitt des Randbogens bezeichnet werden. Der Anschluss zum Rotorblatt des Randbogens kann auch als Anschlussbereich des Randbogens bezeichnet werden. Der Blitzrezeptor bzw. Blitzschutzrezeptor weist einen äußeren und einen inneren Teil auf. Der äußere Teil bildet eine Randbogenspitze bzw. weist die Randbogenspitze auf, und der innere Teil des Blitzrezeptors bzw. Blitzschutzrezeptors ist zum Verbinden mit dem zweiten Teil des Randbogens vorgesehen und kann auch als Rezeptoransatz bezeichnet werden.

Die Figuren 1 bis 3 veranschaulichen insbesondere den Aufbau des Randbogens, nämlich insbesondere die Verwendung unterschiedlicher Materialen in dem Randbogen, insbesondere die Verwendung eines elektrisch leitenden Materials für die Spitze des Blitzrezeptors 3 und die Verwendung eines faserverstärkten Kunststoffs im Wesentlichen für den übrigen Bereich des Randbogens.

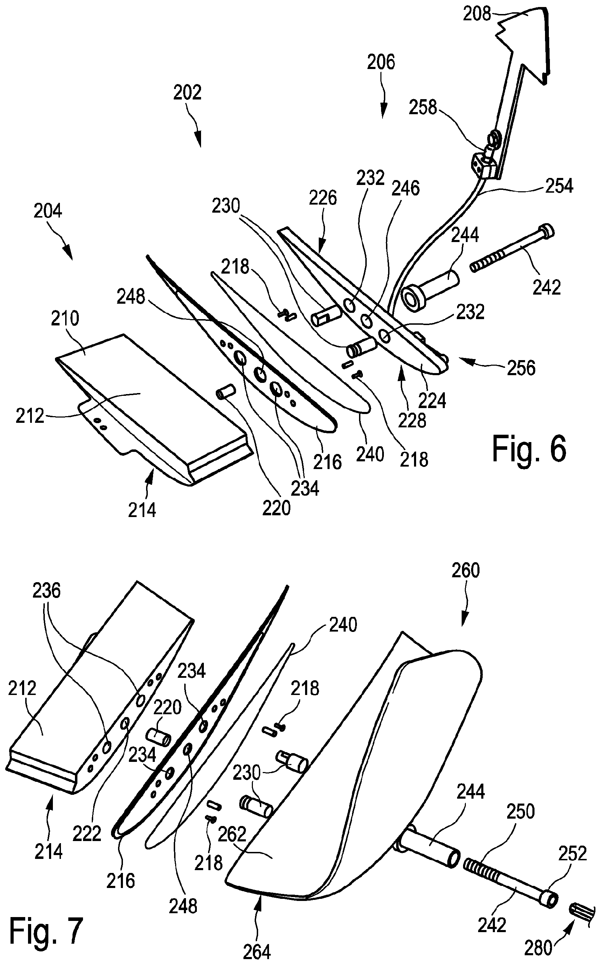

Die Figuren 6 bis 9 betreffen die Anbringung eines Randbogens bzw. einer Blattspitze an einem Rotorblatt bzw. an dem Hauptteil des Rotorblattes. Eine solche Art der Verbindung kann auch für den in den Figuren 1 bis 3 beschriebenen Randbogen verwendet werden, wobei ggf. kleinere Anpassungen an dem Randbogen der Figuren 1 bis 3 vorzunehmen wäre, insbesondere um den Spitzenabschnitt an der Blattspitze bzw. dem Randbogen gemäß den Figuren 1 bis 3 anzuordnen und eine Betätigbarkeit des Fixiermittels zu erreichen. Jedenfalls sind die Aspekte, die beispielhaft im Zusammenhang mit den Figuren 1 bis 3 beschrieben wurden, mit den Aspekten, die beispielhaft mit den Figuren 6 bis 9 beschrieben werden, kombinierbar und gemäß Ausführungsformen der vorliegenden Erfindung werden solche Kombinationen auch vorgeschlagen.

Das Rotorblatt, das exemplarisch und sehr vereinfachend in Figur 3 gezeigt ist, kann sowohl einen Randbogen gemäß den Figuren 1 bis 3, als auch einen gemäß Figur 7 aufweisen und der Randbogen 1 wird vorzugsweise mit einer Befestigungsvorrichtung befestigt, wie sie bzw. wie Teile von ihr in den Figuren 6 bis 9 beschrieben werden. Die Übersichtsdarstellung der Figur 4 gibt allerdings die konkrete Art der Befestigung des Randbogens 1 an dem Rotorblatt 30 nicht wieder.

Ebenso können die Rotorblätter, die an der Windenergieanlage gemäß Figur 5 gezeigt sind, jeweils einen Randbogen gemäß den Figuren 1 bis 3 aufweisen und/oder mittels einer Verbindungsvorrichtung befestigt sein, zu der Details in den Figuren 6 bis 9 beispielhaft erläutert werden.

Figur 5 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an. Figur 5 zeigt in diesem Sinne eine Windenergieanlage 100 mit erfindungsgemäßen Rotorblättern und Rotorblattspitzen bzw. Randbögen.

Figur 6 zeigt eine Verbindungsvorrichtung 202 mit einem Basisabschnitt 204 und einem Spitzenabschnitt 206. Außerdem ist ein Blitzrezeptor 208 gezeigt und mit dem Spitzenabschnitt 206 elektrisch leitend verbunden.

Der Basisabschnitt weist einen Blattanschlussbereich 210 auf, der in einem Bereich des Rotorblatts, nämlich an dessen Ende, anzuordnen und zu befestigen ist. Dafür weist er insbesondere großflächige Klebflächen 212 und 214 auf, die dort mit dem glasfaserverstärkten Material des Rotorblattes verklebt werden können. Als Abschluss wird eine Abschlussbasisplatte 216 an dem Blattanschlussbereich 210 mittels zwei Befestigungsschrauben 218 befestigt. Die Abschlussbasisplatte 216 weist dabei das Profil des Rotorblatts in dem Bereich auf und erreicht dadurch einen sauberen Abschluss des Rotorblatts zur anzusetzenden Blattspitze hin.

An der Abschlussbasisplatte 216 wird von innen, nämlich in einem zum Blattanschlussbereich 210 weisenden Bereich, eine Gewindehülse 220 eingesetzt, die ein Innengewinde aufweist und im zusammengebauten Zustand des Basisabschnitts 204 von außen zugänglich ist.

In der perspektivischen Darstellung der Figur 7 ist zudem zu erkennen, dass der Blattanschlussbereich 210 eine Hülsenaufnahme 222 zum Aufnehmen der Gewindehülse 220 aufweist.

Figur 6 zeigt zu dem Spitzenabschnitt 206, dass dieser eine Abschlussspitzenplatte 224 aufweist, die einen Abschluss der anzusetzenden Blattspitze bilden soll und ebenfalls etwa das Profil des Rotorblatts bzw. der Blattspitze in diesem Bereich aufweist. An Klebflächen 226 und 228 wird die Abschlussspitzenplatte 224 an der Blattspitze verklebend befestigt.

Zum Ansetzen bzw. Einsetzen der Blattspitze an bzw. in das Blattende, nämlich den Basisabschnitt 204, weist die Abschlussspitzenplatte 224 zwei Einsetzstifte oder Einsetzbolzen 230 auf, die in den Stiftbasisbohrungen 232 fest eingesetzt werden. Zum Ansetzen der Blattspitze an dem Rotorblatt werden diese Einsetzstifte 230 dann durch entsprechende Einsetzöffnungen 234 in der Abschlussbasisplatte 216 reichen und in Einsetzaufnahmen 236 in dem Blattanschlussbereich 210 eingesetzt, die nur in der Perspektive gemäß Figur 7 zu sehen sind. Zwischen der Abschlussbasisplatte 216 und der Abschlussspitzenplatte 224 wird eine Trennfuge 240 vorgesehen, die etwa Art und Ausmaß einer sog. O-Ringdichtung hat. Die Trennfuge 240 erreicht, dass die Abschlussbasisplatte 216 und die Abschlussspitzenplatte 224 mit einer kleinen Fuge zueinander beabstandet befestigt werden. Hierdurch kann die Trennfuge 240 ggf. geringe Ausgleiche schaffen.

Zum Fixieren wird dann eine Schraube 242, die hier als Fixiermittel arbeitet, über eine Spannhülse 244, eine Fixierbohrung 246 und eine weitere Mittelbohrung 248 in die Gewindehülse 220 eingeschraubt. Durch die Spannhülse 244 kann eine Vorspannung gehalten werden und eine Ermüdung der Verbindung wird dadurch vermieden, zumindest stark verzögert.

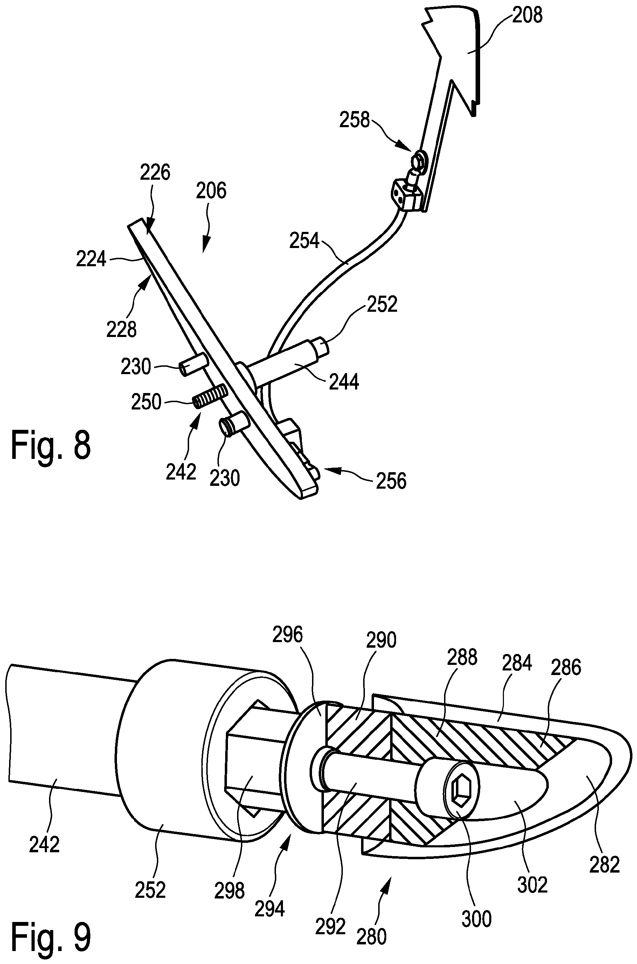

Figur 8 zeigt insoweit einen zusammengesetzten Spitzenabschnitt 206, der zum Verbinden mit dem Basisabschnitt 204 vorbereitet ist. Die Figur 8 verdeutlicht auch einen ersten Endbereich 250, mit dem das Fixiermittel bzw. die Schraube 242 in die Gewindehülse 220 eingreifen soll, und einen zweiten Endbereich 252, der hier als Schraubenkopf ausgebildet ist, und an der Spannhülse 244 ansetzt.

In den Figuren 6 und 8 ist zudem der elektrische Anschluss des Blitzrezeptors 208 über eine elektrische Leitung 254 an der Abschlussspitzenplatte 224 im Bereich eines Plattenanschlusses 256 angeschlossen. Am Rezeptor 208 ist ein Rezeptoranschluss 258 vorgesehen.

Der Figur 7 ist zudem eine Blattspitze 260 zu entnehmen, die hier nur schematisch dargestellt ist und insbesondere den Blitzrezeptor 208 in dieser Darstellung nicht herausarbeitet. Diese Blattspitze ist zur Druckseite 262 des Rotorblattes und damit auch der Blattspitze 260 gebogen. Dadurch entsteht an der Saugseite 264 eine konvexe Krümmung bzw. durch die Krümmung eine konvexe Oberfläche 266, durch die das Fixiermittel 242 betätigt werden kann. Zudem kann auch die Distanzhülse 244 und auch das Fixiermittel 242 durch eine solche Öffnung, die in der Perspektive der Figur 7 aber nicht zu erkennen ist, in die Blattspitze 260 eingeführt werden. Figur 7 deutet zudem ein Verschlussmittel 280 an. Dieses Verschlussmittel 280 ist in Figur 9 im Detail dargestellt. Die teilgeschnittene Darstellung der Figur 9 deutet einen Oberflächenbereich 282 der Blattspitze 260 an. Außerdem ist ein Öffnungsrand 284 dargestellt, in dem eine Öffnung 286 ausgebildet ist, in der das Verschlussmittel 280 eingesetzt ist.

Dabei weist das Verschlussmittel 280 einen Abschlussabschnitt 288 auf, der bis zur Oberfläche 282 reicht bzw. in dem gezeigten Bereich die Oberfläche 282 ausbildet. Benachbart zu dem Abschlussabschnitt 288 ist ein Stauchkörper 290, wobei der Stauchkörper 290 und der Abschlussabschnitt 288 geschnitten dargestellt sind.

Zum Stauchen ist ein Stauchmittel 292 im Grunde als Schraube ausgebildet und greift in einen Gegenkörper 294 ein. Der Gegenkörper 294 weist eine Andrückscheibe 296 und einen Halteabschnitt 298 auf. Der Halteabschnitt 298 ist als Außensechskant ausgebildet und sitzt im Grunde wie ein entsprechender Sechskantschlüssel in dem Schraubenkopf 252 des Fixiermittels 242. Der Schraubenkopf 252 weist einen Innensechskant in dem Bereich auf, in den der Halteabschnitt 298 wie ein entsprechender Schraubenschlüssel eingesetzt ist. Der Halteabschnitt 298 sitzt im Grunde nur locker in diesem Schraubenkopf 252 und der Schraubenkopf 252 verhindert nur, dass Gegenkörper 294 beim Drehen des Stauchmittels 292 mitgedreht wird. Eine Verbindung zu dem Schraubenkopf 252 besteht ansonsten gemäß dieser Ausführung nicht. Der Schraubenkopf 252 bildet somit eine Halteaufnahme für diesen Halteabschnitt 298.

Wird nun das Stauchmittel 292 bspw. über seinen Schraubenkopf 300 in den Gegenkörper 294 hineingeschraubt, verringert sich der Abstand zwischen dem Abschlussabschnitt 288 und der Andrückscheibe 296 des Gegenkörpers 294. Der Stauchkörper 290 wird dadurch gestaucht und weitet sich nach außen auf. Dadurch wird im gezeigten Beispiel im Wesentlichen über einen Reibschluss eine Befestigung der Verschlussmittel 280 in der Öffnung 286 erreicht.

Die Verschlussmittel 280 weist zum Betätigen des Stauchmittels 292 noch eine kleine Betätigungsöffnung 302 auf, die aber im Vergleich zur Öffnung 286 klein ist und weder aerodynamisch ein Problem darstellt, noch das Eindringen von Wasser oder verschmutzter Luft leicht ermöglicht.

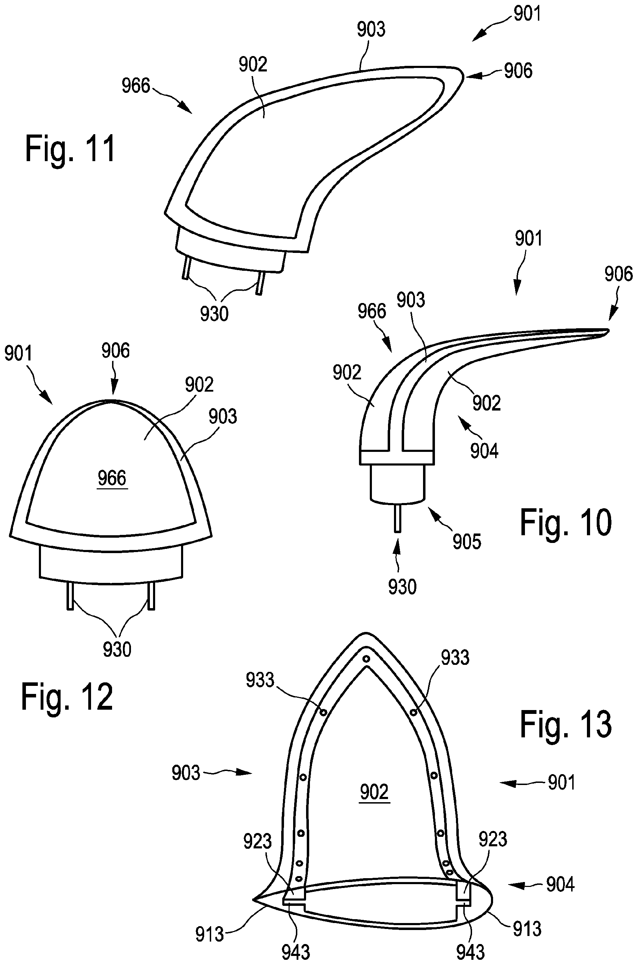

Figur 10 zeigt einen Randbogen 901 in einer seitlichen Ansicht mit einem Spitzenabschnitt 906 und einem Basisabschnitt 904. Der Randbogen 901 weist einen Befestigungsbereich 905 mit schematisch dargestellten Befestigungsmitteln 930 auf. Der Randbogen 901 weist dabei zwischen Spitzenabschnitt 906 und Befestigungsbereich 905 einen Bogen mit einer Außenbiegung 966 auf. Außerdem weist der Randbogen 901 im Wesentlichen zwei Abschnitte auf, nämlich einen ersten Abschnitt 903 aus Metall und einen zweiten Abschnitt 902 aus einem nicht leitfähigen elektrischen Material.

Figur 11 zeigt eine perspektivische Ansicht des Randbogens 901 im Wesentlichen aus einer Sicht auf die Außenbiegung 966. Figur 12 zeigt eine Ansicht des Randbogens 901 auf die Außenbiegung 966. Aus den Figuren 11 und 12 wird auch deutlich, dass der erste Abschnitt 903 den zweiten Abschnitt 902 einfasst.

Figur 13 zeigt den Randbogen 901 in einer Schnittansicht in einem Schnitt durch den Basisabschnitt 904, wobei aus Gründen der Übersichtlichkeit die Schnittflächen nicht schraffiert gezeichnet sind. Dabei ist die Ansicht der Figur 13 auf die konkave Seite des Randbogens 901, also auf die der Außenbiegung 966 abgewandte Seite.

In dieser Ansicht der Figur 13 ist zu erkennen, dass der erste Abschnitt 903 als Rahmen vorgesehen ist und einen Aufnahmerahmen 913 und einen Befestigungsrahmen 923 aufweist. Der Befestigungsrahmen 923 ist mit Befestigungsmitteln 933 an dem Aufnahmerahmen 913 befestigt. Zwischen Aufnahmerahmen 913 und Befestigungsrahmen 923 ist ein Randabschnitt 943 des zweiten Abschnitts 902 fest aufgenommen. Der Randbogen 901 kann somit, vereinfachend ausgedrückt, so zusammengesetzt werden, dass der zweite Abschnitt 902 mit seinem Randabschnitt 943 in den Aufnahmerahmen 913 eingelegt wird. Der Randabschnitt 943 liegt dabei auf einem entsprechenden Bereich des Aufnahmerahmens 913 auf und ist ansonsten bereits passgenau in den Aufnahmerahmen 913 eingepasst. Der Befestigungsrahmen 923 wird dann im Wesentlichen auf den Aufnahmerand 943 aufgelegt und dabei auch in den Aufnahmerahmen 913 eingesetzt.

### Legende:

- 1.: Randbogen
- 2.: Oberfläche Randbogen
- 3.: Blitzrezeptor(äußere Teil)
- 4.: Anschluss zum Rotorblatt
- 5.: Blitzschutzleiter
- 6.: Blitzschutzrezeptor (innerer Teil)
- 10.: Wabenstützstruktur Verstärkung des Randbogens
- 11.: Anschluss für Blitzrezeptor
- 20.: Füllung
- 21.: Verstärkung
- 30.: Rotorblatt einer Windenergieanlage
- 202.: Verbindungsvorrichtung
- 204.: Basisabschnitt
- 206.: Spitzenabschnitt
- 208.: Blitzrezeptor
- 210.: Blattanschlussbereich
- 212.: Klebeflächen
- 214.: Klebeflächen
- 216.: Abschlussbasisplatte
- 218.: Befestigungsschrauben
- 220.: Gewindehülse
- 222.: Hülsenaufnahme
- 224.: Abschlussspitzenplatte
- 226.: Klebeflächen
- 228.: Klebeflächen
- 230.: Einsetzstifte/-bolzen
- 232.: Stiftbasisbohrungen
- 234.: Einsetzöffnungen
- 236.: Einsetzaufnahmen
- 240.: Trennfuge
- 242.: Schraube/Fixiermittel
- 244.: Spannhülse
- 246.: Fixierbohrung
- 248.: Mittelbohrung
- 250.: erster Endbereich
- 252.: zweiter Endbereich/Schraubenkopf
- 254.: elektrische Leitung
- 256.: Plattenanschluss
- 258.: Rezeptoranschluss
- 260.: Blattspitze
- 262.: Druckseite
- 264.: Saugseite
- 266.: konvexe Oberfläche/Krümmung
- 280.: Verschlussvorrichtung
- 282.: Oberflächenbereich
- 284.: Öffnungsrand
- 286.: Öffnung
- 288.: Abschlussabschnitt
- 290.: Stauchkörper
- 292.: Stauchmittel/Schraube
- 294.: Gegenkörper
- 296.: Andrückscheibe
- 298.: Halteabschnitt
- 300.: Schraubenkopf 292
- 302.: Betätigungsöffnung
- 901.: Randbogen
- 902.: zweiter Abschnitt
- 903.: erster Abschnitt
- 904.: Basisabschnitt
- 905.: Befestigungsbereich
- 906.: Spitzenabschnitt
- 913.: Aufnahmerahmen
- 923.: Befestigungsrahmen
- 930.: Befestigungsmittel
- 933.: Befestigungsmittel
- 943.: Randabschnitt
- 966.: Außenbiegung

## Patentansprüche

1. Rotorblatt (30) einer Windenergieanlage (100) mit
- einem Blatthauptteil und
- einer Blattspitze (260), wobei
- die Blattspitze (260) mittels einer Verbindungsvorrichtung (202) an dem Hauptteil lösbar befestigt wird und die Verbindungsvorrichtung (202)
- einen an der Blattspitze (260) befestigten Spitzenabschnitt (206) und
- einen an dem Blatthauptteil befestigten Basisabschnitt (204) zum Aufnehmen des Spitzenabschnitts (206) aufweist,
wobei der Spitzenabschnitt (206)
- wenigstens ein zum Basisabschnitt (204) reichendes Fixiermittel (242) zum Fixieren des Spitzenabschnitts (206) an dem Basisabschnitt (204) aufweist und
- das Fixiermittel (242) zum Vornehmen der Fixierung durch eine Öffnung (286) in der Oberfläche (282) der Blattspitze (260) hindurch betätigbar ist,
**dadurch gekennzeichnet, dass**
die Blattspitze (260) gebogen ist, insbesondere zur Druckseite des Rotorblattes (1) hin, und in einer dadurch entstehenden Außenbiegung (266) die Öffnung (286) zum Betätigen des Fixiermittels (242) ausgebildet ist.

2. Rotorblatt (30) nach Anspruch 1,
**dadurch gekennzeichnet, dass**
der Blatthauptabschnitt und/oder die Blattspitze (260) überwiegend aus faserverstärktem Kunststoff, insbesondere glasfaserverstärktem Kunststoff gefertigt ist und der Basisabschnitt (204) in den Blatthauptabschnitt und/oder der Spitzenabschnitt (206) in die Blattspitze (260) einlaminiert ist.

3. Rotorblatt (30) nach einem der Ansprüche 1 oder 2,
**dadurch gekennzeichnet, dass**
der Spitzenabschnitt (206) und/oder der Basisabschnitt (204) wenigstens einen Verbindungsstift (230) zum kippstabilen Einsetzen in korrespondierende Öffnungen (236) an dem Basisabschnitt (204) bzw. dem Spitzenabschnitt (206) aufweist.

4. Rotorblatt (30) nach einem der vorstehenden Ansprüche,
**dadurch gekennzeichnet, dass**
das wenigstens eine Fixiermittel (242)
- mit einem ersten Endbereich (250) in eine korrespondierende Aufnahme (220) in dem Basisabschnitt (204) eingreift und
- mit einem zweiten, dem ersten Endbereich (250) abgewandten Endbereich (252), zum Vornehmen der Fixierung und zum Lösen der Fixierung in der Blattspitze (260) angeordnet ist, wobei der zweite Endbereich (252) so in die Blattspitze (260) unter der Öffnung (286) der Oberfläche (282) der Blattspitze (260) eingelassen ist, dass es durch die Öffnung (286) in dieser Oberfläche (282) betätigt werden kann und zwischen dem zweiten Endbereich (252) und der Oberfläche (282) Platz zum Anordnen eines Verschlussmittels (280) zum zur Oberfläche (282) bündigen Verschließen der Öffnung (286) verbleibt.

5. Rotorblatt (30) nach einem der vorstehenden Ansprüche,
**dadurch gekennzeichnet, dass**
das Fixiermittel (242) als eine Schraube (242) ausgebildet ist mit einem bzw. dem ersten Endbereich (250) als Gewinde zum Einschrauben in eine bzw. die korrespondierende Aufnahme (220) in dem Basisabschnitt (204) und einem bzw. dem zweiten Endbereich (252) als Schraubenkopf (252) zum Betätigen der Schraube (242).

6. Rotorblatt (30) nach einem der vorstehenden Ansprüche,
**dadurch gekennzeichnet, dass**
ein bzw. das Verschlussmittel (280) umfasst ist und dass das Verschlussmittel (280) zum lösbaren Befestigen in der Öffnung (286) einen Befestigungsmechanismus aufweist.

7. Rotorblatt (30) nach Anspruch 6,
**dadurch gekennzeichnet, dass**
das Verschlussmittel (280) dazu vorbereitet ist, durch eine Stauchung in einer Längsrichtung, zumindest eines Teilabschnitts (290), seine Form, seinen Umfang und/oder seine Breite zumindest in diesem Teilabschnitt (290) zu verändern, insbesondere zu vergrößern, um dadurch in der Öffnung (286) gehalten zu werden.

8. Rotorblatt (30) nach Anspruch 6 oder 7,
**dadurch gekennzeichnet, dass**
die Stauchung durch Drehen eines Stauchungsmittels (242), insbesondere einer Schraube (242), bewirkt bzw. gelöst wird und dass das Verschlussmittel (280) einen an das Fixiermittel (242) angepassten Halteabschnitt (252) aufweist und/oder das Fixiermittel (242) eine an das Verschlussmittel (280), insbesondere den Halteabschnitt (298) angepasste Halteaufnahme (252) aufweist, um an oder in dem Fixiermittel (242) so gehalten zu werden, dass sich das Verschlussmittel (280) beim Drehen des Stauchungsmittels (290) nicht mit dreht.

9. Rotorblatt (30) nach einem der vorstehenden Ansprüche,
**dadurch gekennzeichnet dass**
die Verbindungsvorrichtung (202) mit Blitzleitmitteln (208, 254) verbunden ist und dazu vorbereitet ist, elektrischen Strom eines in die Blattspitze einschlagenden Blitzes zum Blatthauptabschnitt weiterzuleiten, und dass vorzugsweise die Verschlussmittel (280) elektrisch isolierend ausgeführt sind, oder so elektrisch leitend ausgeführt sind, dass sie den elektrischen Strom eines in die Verschlussmittel (202) einschlagenden Blitzes zur Verbindungsvorrichtung (202) weiterleiten können.

10. Verbindungsvorrichtung (202) zum Verbinden eines Blatthauptteils und einer Blattspitze (260) eines Rotorblattes (30) an einander, wobei die Verbindungsvorrichtung (202)
- einen an der Blattspitze (260) zu befestigenden Spitzenabschnitt (206) und
- einen an dem Blatthauptteil zu befestigenden Basisabschnitt (204) zum Aufnehmen des Spitzenabschnitts (206) aufweist,
wobei der Spitzenabschnitt (206)
- wenigstens ein zum Basisabschnitt (204) reichendes Fixiermittel (242) zum Fixieren des Spitzenabschnitts (206) an dem Basisabschnitt (204) aufweist und
- das Fixiermittel (242) zum Vornehmen der Fixierung durch eine Öffnung (286) in der Oberfläche (282) der Blattspitze (260) hindurch betätigbar ist,
**dadurch gekennzeichnet, dass** sie dazu vorbereitet ist, in einem Rotorblatt (30) mit einer gebogenen Blattspitze (260) nach einem der Ansprüche 1 bis 9 bestimmungsgemäß verwendet zu werden.

11. Blattspitze (260) eines Rotorblattes (30) einer Windenergieanlage (100) mit einem Spitzenabschnitt (206) einer Verbindungsvorrichtung (202) gemäß Anspruch 10, wobei die Blattspitze (260) mit dem Spitzenabschnitt (206) dazu vorbereitet ist, in einem Rotorblatt (30) nach einem der Ansprüche 1 bis 9 bestimmungsgemäß verwendet zu werden.

12. Verfahren zum Montieren einer Blattspitze (260) gemäß Anspruch 11 an einem Blatthauptteil eines Rotorblattes (30) gemäß einem der Ansprüche 1 bis 9, umfassend die Schritte:
- Ansetzen der Blattspitze (260) mit ihrem Spitzenabschnitt (206) an den an dem Blatthauptteil befestigten Basisabschnitt (204) und
- Fixieren der so angesetzten Blattspitze (260) durch Betätigen des Fixiermittels (242).

13. Verfahren nach Anspruch 12,
**dadurch gekennzeichnet, dass**
nach dem Fixieren ein bzw. das Verschlussmittel (280) in die Öffnung (286) des Rotorblattes (1) eingesetzt und in der Öffnung (286) befestigt wird, insbesondere durch Betätigen eines bzw. des Stauchmittels (292).

14. Randbogen (1) eines Rotorblattes (30) einer Windenergieanlage (100), wobei der Randbogen (1) einen ersten Abschnitt (3) aus wenigstens einem ersten, elektrisch leitfähigen Material, und einen zweiten Abschnitt (2) aus einem zweiten, elektrisch nicht leitfähigen Material aufweist,
**dadurch gekennzeichnet, dass** der erste Abschnitt (903) als Rahmen zum Aufnehmen oder Einfassen des zweiten Abschnitts (902) ausgebildet ist.

15. Randbogen (901) nach Anspruch 14, **dadurch gekennzeichnet, dass** der erste Abschnitt (3) als Rand des Randbogens ausgebildet ist und den zweiten Abschnitt ganz oder teilweise einfasst.

16. Randbogen (901) nach einem der Ansprüche 14 und 15, **dadurch gekennzeichnet, dass** der erste Abschnitt (903), insbesondere der Rahmen,
- einen Aufnahmerahmen (913) zum Aufnehmen des zweiten Abschnitts (902) und
- einen Befestigungsrahmen (923) zum Befestigen an dem Aufnahmerahmen (913) und Fixieren des zweiten Abschnitts (902) an dem Aufnahmerahmen (913) aufweist.

17. Randbogen (901) nach einem der Ansprüche 14 bis 16, dazu vorbereitet, als Blattspitze an dem Rotorblatthauptteil eines Rotorblattes gemäß einem der Ansprüche 1 bis 10 befestigt zu werden, insbesondere mittels einer Verbindungsvorrichtung nach Anspruch 11 oder 12.

18. Rotorblatt (30) einer Windenergieanlage (100), umfassend einen Randbogen (1) nach einem der Ansprüche 14 bis 17.

19. Windenergieanlage (100) mit einem Rotorblatt nach einem der Ansprüche 1 bis 9 oder 18.

20. Verfahren zum Herstellen eines Randbogens (1) nach einem der Ansprüche 14 bis 17.

## Claims

1. A rotor blade (30) of a wind energy plant (100) having
- a main component of the blade and
- a blade tip (260), whereby
- the blade tip (260) is releasably attached to the main component by means of a connection device (202), and the connection device (202) has
- a tip section (206) attached to the blade tip (260) and
- a base section (204) attached to the main component of the blade to receive the tip section (206),
whereby the tip section (206)
- has at least one fastener (242) that extends to the base section (204) for fastening the tip section (206) to the base section (204) and
- the fastener (242) for performing the attachment can be actuated through an opening (286) in the surface (282) of the blade tip (260), **characterized in that**
the blade tip (260) is deflected, in particular towards the pressure side of the rotor blade (1), and in a resulting outward deflection (266), the opening (286) is designed to actuate the fastener (242).

2. The rotor blade (30) according to Claim 1,
**characterized in that**
the main section of the blade and/or the blade tip (260) is predominantly made up of fiber reinforced plastic, in particular glass fiber reinforced plastic, and the base section (204) is laminated into the main section of the blade and/or the tip section (206) is laminated into the blade tip (260).

3. The rotor blade (30) according to one of the Claims 1 or 2,
**characterized in that**
the tip section (206) and/or the base section (204) has at least one connecting pin (230) for tilt-resistant insertion into corresponding openings (236) at the base section (204) or the tip section (206) respectively.

4. The rotor blade (30) according to one of the above Claims,
**characterized in that**
at least one fastener (242)
- engages with a first end region (250) in a corresponding holding fixture (220) in the base section (204) and
- is disposed in the blade tip (260) with a second end region (252) that faces away from the end region (250), in order to perform the attachment and disengage the attachment, whereby the second end region (252) is set into the blade tip (260) below the opening (286) of the surface (282) of the blade tip (260) in such a way that it can be actuated through the opening (286) in this surface (282), and such that space remains between the second end region (252) and the surface (282) in order to arrange a sealing means (280) so that the opening (286) can be closed flush with the surface (282).

5. The rotor blade (30) according to one of the above Claims,
**characterized in that**
the fastener (242) is formed as a bolt (242) having a first end region or the first end region (250) as a thread for screwing into a corresponding holding fixture or the corresponding holding fixture (220) in the base section (204), and having a second end region or the second end region (252) as a bolt head (252) for actuating the bolt (242).

6. The rotor blade (30) according to one of the above Claims,
**characterized in that**
a sealing means or the sealing means (280) is incorporated and that the sealing means (280) has an attachment mechanism in the opening (286) for releasable attachment.

7. The rotor blade (30) according to Claim 6,
**characterized in that**
the sealing means (280) is prepared in such a way that the form, circumference and/or width thereof at least in a partial section (290) may be modified, and in particular enlarged, by means of a compression of at least this partial section (290) in a longitudinal direction, in order to be retained in the opening (286).

8. The rotor blade (30) according to Claims 6 or 7,
**characterized in that**
the compression is carried out or released by means of rotating a compression means (242), in particular a bolt (242), and that the sealing means (280) has a retaining section (252) that is adapted to the fastener (242) and/or the fastener (242) has a retaining socket (252) that is adapted to the sealing means (280), in particular the retaining section (298), so that it is held on or in the fastener (242) in such a way that the sealing means (280) does not rotate when the compression means (290) is rotated.

9. The rotor blade (30) according to one of the above Claims,
**characterized in that**
the connection device (202) is connected to a means of conducting lightning (208, 254) and is prepared to transmit electric current from lightning that strikes the blade tip to the main section of the blade, and **in that** the sealing means (280) are preferably designed in such a way that they are insulating, or designed in such a way that they are electrically conductive such that they can transmit the electric current from lightning that strikes the sealing means (202) to the connection device (202).

10. Connection device (202) for connecting a main component of the blade and a blade tip (260) of a rotor blade (30) to one another, whereby the connection device (202)
- has a tip section (206) to be attached to the blade tip (260) and
- a base section (204) to be attached to the main component of the blade to receive the tip section (206),
whereby the tip section (206)
- has at least one fastener (242) that extends to the base section (204) for fastening the tip section (206) to the base section (204) and
- the fastener (242) for performing the attachment can be actuated through an opening (286) in the surface (282) of the blade tip (260), **characterized in that** it is prepared for intended use in a rotor blade (30) with a deflected blade tip (260) according to one of the Claims 1 to 9 .

11. The blade tip (260) of a rotor blade (30) of a wind energy plant (100) having a tip section (206) of a connection device (202) according to Claim 10, whereby the blade tip (260) having the tip section (206) is prepared for intended use in a rotor blade (30) according to one of the claims 1 to 9.

12. Method for mounting a blade tip (260) according to Claim 11 to a main component of the blade of a rotor blade (30) according to one of the Claims 1 to 9, comprising the steps:
- application of the blade tip (260) with its tip section (206) on the base section (204) attached to the main component of the blade and
- securing of the blade tip (260) thus applied by actuating the fastener (242).

13. The method according to Claim 14,
**characterized in that**
after securing, a sealing means or the sealing means (280) is inserted into the opening (286) of the rotor blade (1) and fastened in the opening (286), in particular by actuating a compression means or the compression means (292).

14. An edge arc (1) of a rotor blade (30) of a wind energy plant (100), wherein the edge arc (1) has a first section (3) made up of at least a first electrically conductive material, and a second section (2) made up of a second, electrically non-conductive material,
**characterized in that** the first section (903) is formed as a frame for receiving or enclosing the second section (902).

15. The edge arc (901) according to Claim 14 **characterized in that** the first section (3) is formed as an edge of the edge arc and entirely or partially encloses the second section.

16. The edge arc (901) according to one of the Claims 14 and 15 **characterized in that** the first section (903), in particular the frame,
- has a holding frame (913) to receive the second section (902) and
- an attachment frame (923) for attachment to the holding frame (913) and securing the second section (902)
to the holding frame (913).

17. The edge arc (901) according to one of the Claims 14 to 16, prepared to be attached as a blade tip to the main component of the rotor blade for a rotor blade pursuant to one of the Claims 1 to 10, in particular by means of a connection device according to Claim 11 or 12.

18. A rotor blade (30) of a wind energy plant (100), comprising an edge arc (1) according to one of the Claims 14 to 17.

19. A wind energy plant (100) having a rotor blade according to one of the Claims 1 to 9 or 18.

20. Method for producing an edge arc (1) according to one of the Claims 14 to 17.

## Revendications

1. Pale de rotor (30) d'une éolienne (100) avec
- une partie principale de pale et
- une pointe de pale (260), dans laquelle
- la pointe de pale (260) est fixée de manière amovible au niveau de la partie principale au moyen d'un dispositif de liaison (202) et le dispositif de liaison (202) présente
- une section de pointe (206) fixée au niveau de la pointe de pale (260) et
- une section de base (204) fixée au niveau de la partie principale de pale servant à recevoir la section de pointe (206),
dans laquelle la section de pointe (206)
- présente au moins un moyen de blocage (242) atteignant la section de base (204), servant à bloquer la section de pointe (206) au niveau de la section de base (204) et
- le moyen de blocage (242) servant à réaliser le blocage peut être actionné à travers une ouverture (286) dans la surface (282) de la pointe de pale (260),
**caractérisée en ce que**
la pointe de pale (260) est cintrée, en particulier en direction du côté de pression de la pale de rotor (1), et l'ouverture (286) servant à actionner le moyen de blocage (242) est réalisée dans un cintrage extérieur (266) en résultant.

2. Pale de rotor (30) selon la revendication 1,
**caractérisée en ce que**
la section principale de pale et/ou la pointe de pale (260) sont produites principalement à partir d'une matière plastique renforcée par des fibres, en particulier à partir d'une matière plastique renforcée par des fibres de verre, et la section de base (204) est élaborée par laminage dans la section principale de pale et/ou la section de pointe (206) est élaborée par laminage dans la pointe de pale (260).

3. Pale de rotor (30) selon l'une quelconque des revendications 1 ou 2,
**caractérisée en ce que**
la section de pointe (206) et/ou la section de base (204) présentent au moins une tige de liaison (230) destinée à être insérée de manière stable au basculement dans des ouvertures (236) correspondantes au niveau de la section de base (204) ou de la section de pointe (206).

4. Pale de rotor (30) selon l'une quelconque des revendications précédentes,
**caractérisée en ce que**
l'au moins un moyen de blocage (242)
- vient en prise par une première zone d'extrémité (250) avec un logement (220) correspondant dans la section de base (204), et
- est disposé dans la pointe de pale (260) avec une deuxième zone d'extrémité (252) opposée à la première zone d'extrémité (250) servant à effectuer le blocage et servant à défaire le blocage, dans laquelle la deuxième zone d'extrémité (252) est insérée dans la pointe de pale (260) sous l'ouverture (286) de la surface (282) de la pointe de pale (260) de telle manière qu'elle peut être actionnée par l'ouverture (286) dans ladite surface (282) et qu'il reste de la place entre la deuxième zone d'extrémité (252) et la surface (282) pour disposer un moyen de fermeture (280) servant à fermer en affleurement par rapport à la surface (282) l'ouverture (286).

5. Pale de rotor (30) selon l'une quelconque des revendications précédentes,
**caractérisée en ce que**
le moyen de blocage (242) est réalisé sous la forme d'une vis (242) avec une ou la première zone d'extrémité (250) en tant que filetage destiné à être introduit par vissage dans un ou le logement (220) correspondant dans la section de base (204) et dans une ou la deuxième zone d'extrémité (252) en tant que tête de vis (252) servant à actionner la vis (242).

6. Pale de rotor (30) selon l'une quelconque des revendications précédentes,
**caractérisée en ce**
**qu'**un ou le moyen de fermeture (280) est compris, et que le moyen de fermeture (280) présente un mécanisme de fixation aux fins de la fixation amovible dans l'ouverture (286).

7. Pale de rotor (30) selon la revendication 6,
**caractérisée en ce que**
le moyen de fermeture (280) est préparé pour modifier, en particulier pour agrandir, sa forme, sa périphérie et/ou sa largeur au moins dans ladite section partielle (290) par un écrasement dans une direction longitudinale d'au moins une section partielle (290) pour ainsi être maintenu dans l'ouverture (286).

8. Pale de rotor (30) selon la revendication 6 ou 7,
**caractérisée en ce que**
l'écrasement est provoqué ou déclenché par la rotation d'un moyen d'écrasement (242), en particulier d'une vis (242), et que le moyen de fermeture (280) présente une section de maintien (252) adaptée au moyen de blocage (242), et/ou que le moyen de blocage (242) présente un logement de maintien (252) adapté au moyen de fermeture (280), en particulier à la section de maintien (298) pour être maintenu au niveau ou dans le moyen de blocage (242) de telle sorte que le moyen de fermeture (280) n'est pas entraîné en rotation lors de la rotation du moyen d'écrasement (290).

9. Pale de rotor (30) selon l'une quelconque des revendications précédentes,
**caractérisée en ce que**
le dispositif de liaison (202) est relié à des moyens de guidage d'éclair (208, 254) et est préparé pour transférer vers la section principale de pale un courant électrique d'un éclair frappant la pointe de pale, et que de préférence les moyens de fermeture (280) sont réalisés avec une isolation électrique ou sont réalisés de manière électroconductrice de telle sorte qu'ils peuvent transférer vers le dispositif de liaison (202) le courant électrique d'un éclair frappant les moyens de fermeture (202)

10. Dispositif de liaison (202) servant à relier une partie principale de pale et une pointe de pale (260) d'une pale de rotor (30) l'une au niveau de l'autre, dans lequel le dispositif de liaison (202)
- présente une section de pointe (206) à fixer au niveau de la pointe de pale (260) et
- une section de base (204) à fixer au niveau de la partie principale de pale, servant à recevoir la section de pointe (206),
dans lequel la section de pointe (206)
- présente au moins un moyen de blocage (242) atteignant la section de base (204), servant à bloquer la section de pointe (206) au niveau de la section de base (204), et
- le moyen de blocage (242) servant à effectuer le blocage peut être actionné à travers une ouverture (286) dans la surface (282) de la pointe de pale (260), **caractérisé en ce qu'**il est préparé pour être utilisé conformément à l'usage prévu dans une pale de rotor (30) avec une pointe de pale (260) cintrée selon l'une quelconque des revendications 1 à 9.

11. Pointe de pale (260) d'une pale de rotor (30) d'une éolienne (100) avec une section de pointe (206) d'un dispositif de liaison (202) selon la revendication 10, dans laquelle la pointe de pale (260) est préparée avec la section de pointe (206) pour être utilisée conformément à l'usage prévu dans une pale de rotor (30) selon l'une quelconque des revendications 1 à 9.

12. Procédé servant à monter une pointe de pale (260) selon la revendication 11 au niveau d'une partie principale de pale d'une pale de rotor (30) selon l'une quelconque des revendications 1 à 9, comprenant les étapes de :
- placement de la pointe de pale (260) par sa section de pointe (206) au niveau de la section de base (204) fixée au niveau de la partie principale de pale, et
- blocage de la pointe de pale (260) ainsi placée par l'actionnement du moyen de blocage (242).

13. Procédé selon la revendication 12,
**caractérisé en ce que**
après le blocage un ou le moyen de fermeture (280) est inséré dans l'ouverture (286) de la pale de rotor (1) et est fixé dans l'ouverture (286), en particulier par l'actionnement d'un ou du moyen d'écrasement (292).

14. Bord courbe (1) d'une pale de rotor (30) d'une éolienne (100), dans lequel le bord courbe (1) présente une première section (3) composée d'au moins un premier matériau électroconducteur et une deuxième section (2) composée d'un deuxième matériau non électroconducteur,
**caractérisé en ce que** la première section (903) est réalisée sous la forme d'un cadre servant à recevoir ou à encadrer la deuxième section (902).

15. Bord courbe (901) selon la revendication 14, **caractérisé en ce que** la première section (3) est réalisée sous la forme d'un bord du bord courbe et encadre en totalité ou partie la deuxième section.

16. Bord courbe (901) selon l'une quelconque des revendications 14 et 15, **caractérisé en ce que** la première section (903), en particulier le cadre, présente
- un cadre de réception (913) servant à recevoir la deuxième section (902), et
- un cadre de fixation (923) destiné à être fixé au niveau du cadre de logement (913) et à bloquer la deuxième section (902) au niveau du cadre de logement (913) .

17. Bord courbe (901) selon l'une quelconque des revendications 14 à 16, préparé pour être fixé en tant que pointe de pale au niveau de la partie principale de pale de rotor d'une pale de rotor selon l'une quelconque des revendications 1 à 10, en particulier au moyen du dispositif de liaison selon la revendication 11 ou 12.

18. Pale de rotor (30) d'une éolienne (100), comprenant un bord courbe (1) selon l'une quelconque des revendications 14 à 17.

19. Eolienne (100) avec une pale de rotor selon l'une quelconque des revendications 1 à 9 ou 18.

20. Procédé servant à fabriquer un bord courbe (1) selon l'une quelconque des revendications 14 à 17.
